# EUROPEAN PATENT APPLICATION

(11) **EP 4 645 654 A1**
(43) Date of publication of application: **05.11.2025**
(21) Application number: 23911219.6
(22) Date of filing: 27.06.2023
(51) Int. Cl.: H02K 1/276

(54) **ROTATING ELECTRICAL MACHINE**

(30) Priority: 29.12.2022 JP 2022212817
(71) Applicant: Hitachi Industrial Equipment Systems Co., Ltd., Tokyo 101-0021 (JP); Hitachi, Ltd., Tokyo 100-8280 (JP)
(72) Inventor: HASEGAWA Yu, Tokyo 100-8280 (JP); TAKEUCHI Keisuke, Tokyo 100-8280 (JP); KIMURA Mamoru, Tokyo 101-0021 (JP)
(74) Representative: MERH-IP Matias Erny Reichl Hoffmann Patentanwälte PartG mbB
(86) International application number: PCT/JP2023/023801
(87) International publication number: WO 2024/142435

(57) **Abstract**

The present invention achieves a more lightweight rotor of a rotating electrical machine, and reduces the magnetic resistance of the q-axis while reducing the amount of rotor deformation during high-speed rotation. A plurality of magnet insertion holes 126a-126c of a rotator are located line-symmetrically about the d-axis, which is the magnetic pole central axis. On the inner peripheral side of the magnet insertion holes 126a, 126c close to the q-axis, lightening holes 128, 129 shaped to have curves are formed. The cross-sectional shapes of the lightening holes 128, 129 are arranged such that a nearest point 70 from a rotation axis A1 coincides with a curved portion having the largest curvature. The magnet insertion holes 126a, 126c and a straight part of the lightening holes are arranged to be at a constant distance S for the entirety of the opposing portions thereof, wherein an outermost peripheral position 50 on the side forming a lightening hole is positioned farther to the outer periphery than an end part 60 closest to the central axis of the rotator on the side forming a magnet insertion hole.

## Description

### TECHNICAL FIELD

The present invention relates to a rotating electrical machine, particularly to a radial gap type rotating electrical machine including a rotor with permanent magnets embedded inside the rotor.

### BACKGROUND ART

A permanent magnet type rotating electrical machine in which permanent magnets are embedded in a rotor of the rotating electrical machine has been known. The structure of the rotor of the rotating electrical machine is formed by providing spaces for inserting the magnets in a core made by laminating electromagnetic steel sheets having a predetermined design shape, and inserting the permanent magnets into the spaces. As a conventional technique related to a method for fixing a permanent magnet, for example, there is Patent Document 1. Patent Document 1 discloses a rotor for an inner rotor type rotating electrical machine, the rotor including a rotor core having a core outer peripheral surface as a cylindrical shape; a plurality of permanent magnets embedded inside the rotor core; an inter-magnetic pole bridge provided between two permanent magnets adjacent to each other in a core circumferential direction between rotor magnetic poles, and extending inward in a core radial direction from the core outer peripheral surface; and an inter-magnetic pole void portion formed on a core radial inner side of the inter-magnetic pole bridge between the rotor magnetic poles. The inter-magnetic pole void portion has parallel wall surfaces formed parallel to respective core radial inner surfaces of the permanent magnets on both sides of the inter-magnetic pole bridge, and inner bridges formed between the core radial inner surfaces and the parallel wall surfaces are connected to a core radial inner end portion of the inter-magnetic pole bridge. The permanent magnet is shaped such that a length in a direction parallel to an extending direction of the core radial inner surface is longer than a width in a direction perpendicular to the extending direction. With such a configuration, it is possible to solve the challenge of increasing magnetic resistance on a q-axis while suppressing a decrease in strength.

As another conventional technique related to a method for fixing a permanent magnet, for example, there is Patent Document 2. A rotor described in Patent Document 2 includes a rotor core having a plurality of opening portions formed along a circumferential direction; a plurality of permanent magnets inserted into the plurality of respective openings to form a magnetic pole; and a filler with which gaps between inner peripheral surfaces of the plurality of openings and outer peripheral surfaces of the plurality of permanent magnets are filled in a pressed state. The rotor core further includes holes arranged along the circumferential direction of the rotor core and configured to absorb deformation of the rotor core in the circumferential outward direction. With such a configuration, it is possible to solve the challenge of suppressing deformation of the rotor core.

### CITATION LIST

### PATENT LITERATURS

Patent literature 1: JP 2012-75278 A
Patent literature 2: JP 2007-89291 A

### SUMMARY OF THE INVENTION

### PROBLEMS TO BE SOLVED BY THE INVENTION

In order to save energy through high efficiency and reduce CO2 emissions, a rotating electrical machine requires a small size and high-speed drive for high output. Since a motor generates a large counter-electromotive force in proportion to high-speed rotation, flux-weakening Control is often performed to suppress the counter electromotive force in accordance with the voltage limit of an inverter that drives the motor. At this time, in an embedded magnet type motor, magnet torque is reduced by the weaken field, but reluctance torque that uses magnetic saliency as an electromagnetic force can be used in combination. Since the magnitude of the reluctance torque depends on the phase of an armature current and magnetic saliency, it is important to increase a difference between d-axis magnetic flux and q-axis magnetic flux by ensuring a magnetic path for the q-axis magnetic flux.

Since a large centrifugal force acts on the rotor of the motor during high-speed rotation, safety design is also required to prevent damage of the rotor core due to plastic deformation or preventing the escape of the magnets inserted inside the rotor core, which is a challenge during high-speed rotation. Meanwhile, in order to maintain torque during high-speed rotation, it is necessary to use reluctance torque, and for this purpose, it is necessary to ensure a sufficient path for q-axis magnetic flux of the rotor. As a countermeasure to the problems, in the structures described in Patent Document 1 and Patent Document 2, in order to alleviate stress concentration occurring in the magnet accommodation portions, a void portion is provided between the magnetic poles of the rotor core (on the q-axis).
However, the effect of reducing stress applied to the magnet accommodation portions by hollowing out the rotor core; instead, stress is concentrated in holes formed by hollowing out the rotor core, and stress concentration locations breakage, which is a risk. In addition, since the lightening holes are located in the magnetic path of the q-axis magnetic flux, there occurs another problem: the lightening holes act as magnetic resistance so that motor performance is degraded, which is a risk.

The present invention has been made in view of the above-described background, and an object of the present invention is to provide a radial gap type rotating electrical machine including an embedded magnet type rotor with small magnetic resistance on a q-axis while reducing the amount of deformation of the rotor during high-speed rotation.

Another object of the present invention is to provide a rotating electrical machine that, when a lightening hole that is continuous in a direction of a rotation axis is formed in a rotor core, prevents degradation of motor performance due to stress being concentrated on the lightening hole itself or the lightening hole acting as magnetic resistance of q-axis magnetic flux.

### SOLUTIONS TO PROBLEMS

Representative features of the invention disclosed in this application are as follows. According to one feature of the present invention, a rotating electrical machine includes a stator including a stator coil; and a rotor having a magnet insertion hole into which a permanent magnet constituting a magnetic pole is inserted, and held to be rotatable about a rotation axis. A plurality of the magnet insertion holes are disposed line-symmetrically about a d-axis that is a magnetic pole central axis. In addition, in each magnetic pole of the rotor, a lightening hole is formed in the vicinity of an inner peripheral side (side closer to the rotation axis) of the permanent magnet located away from the q-axis. The lightening hole may have a semicircular shape or a teardrop shape. A contour constituting the lightening hole is formed to include a curve, and a closet point of the lightening hole from the rotation axis is configured by a curve having a largest curvature.

According to another feature of the present invention, a rotor core is formed from electromagnetic steel sheets laminated in a direction of a rotation axis, in each magnetic pole of the rotor core, one permanent magnet is disposed on a d-axis that is a magnetic pole central axis, and remaining permanent magnets are disposed line-symmetrically with respect to the d-axis in the magnetic pole. Furthermore, two lightening holes are provided in the magnetic pole, and are disposed at a slight distance from an inner peripheral side (side closer to the rotation axis) of the permanent magnets closest to q-axes. The permanent magnets, in each of which a circumferential width is larger than a radial thickness, are used. In addition, except for the permanent magnet located on the d-axis, the permanent magnets are obliquely disposed such that directions of circumferential centerlines of the permanent magnets have a predetermined angle θ with a tangent direction of the rotor core. The oblique directions are oriented such that sides of the permanent magnets closer to the p-axes are located outward in a radial direction. Facing portions between the magnet insertion holes and sides on the inner peripheral side of the lightening holes are located to maintain a certain distance, and outermost peripheral positions of the lightening holes are located closer to an outer peripheral side than end portions closest to a central axis of the rotor among sides constituting the magnet insertion holes.

### EFFECTS OF THE INVENTION

According to the present invention, it is possible to provide a radial gap type rotating electrical machine including the embedded magnet type rotor in which the weight of the rotor core is reduced and in which the amount of deformation of the rotor during high-speed rotation is reduced. In addition, since no lightening hole is formed on the q-axis, it is possible to provide a rotating electrical machine that can reduce magnetic resistance and which maintains high-efficiency motor performance.

### BRIEF DESCRIPTION OF THE DRAWINGS

Fig. 1 is a view showing a configuration of a rotating electrical machine 1 according to a first embodiment of the present invention.
Fig. 2 is a cross-sectional view of A-A portion of Fig. 1.
Fig. 3 is a partial enlarged view of a rotor 20 of Fig. 2.
Fig. 4 is a cross-sectional view of a rotating electrical machine 1A according to a second embodiment of the present invention.
Fig. 5 is a partial enlarged view of a rotor 20A of Fig. 4.
Fig. 6 is a cross-sectional view of a rotating electrical machine 1B according to a third embodiment of the present invention.
Fig. 7 is a partial enlarged view of a rotor 20B of Fig. 6.

### MODE FOR CARRYING OUT THE INVENTION

Hereinafter, embodiments of the present invention will be described with reference to the drawings. Incidentally, in the following figures, the same portions are designated by the same reference signs, and repeated descriptions will be omitted.

### FIRST EMBODIMENT

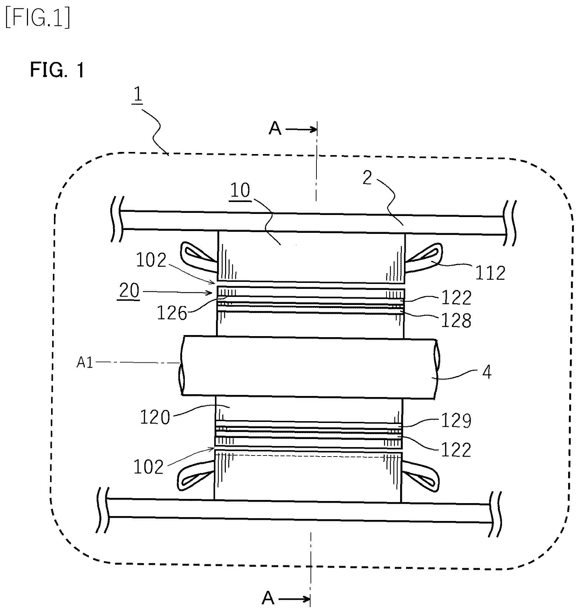

Fig. 1 shows a configuration of a rotating electrical machine (motor) according to a first embodiment of the present invention. Fig. 1 is a cross-sectional view of a rotating electrical machine 1 taken along a vertical plane passing through a rotation axis A1. The rotating electrical machine 1 is a distributed winding inner rotor type permanent magnet synchronous motor in which the number of slots is 48 and the number of magnetic poles is 8. In the present invention, the number of slots and the number of poles are not particularly limited, and for example, the rotating electrical machine 1 may be a motor having 24 slots and two pairs of magnetic poles, or a motor having any other number of slots and poles.

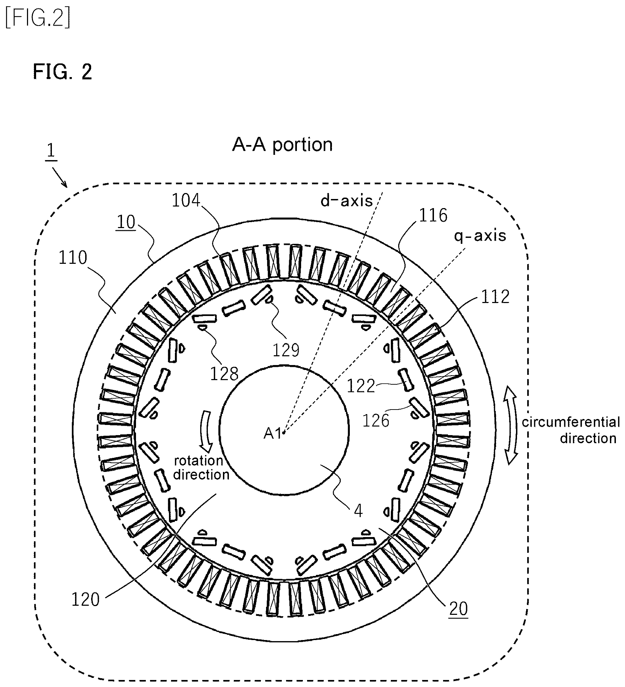

As shown in Fig. 1, the rotating electrical machine 1 includes a stator 10; a rotor 20 rotatably supported on a radial inner side of the stator 10; a casing 2 covering the stator 10; and a rotating shaft 4 fixed to the rotor 20. In the present embodiment, the casing 2 is made of a non-magnetic metal such as an aluminum alloy, and is formed to cover the entirety of the stator 10. The rotating shaft 4 that is partially illustrated is formed with a length such that the rotating shaft 4 protrudes to the outside of one side of the casing 2 to be used as an output shaft. A rotor core 120 having a columnar shape faces an inner peripheral surface of the stator 10 inside the stator 10 having a cylindrical shape with a slight gap 102 therebetween in a radial direction. The stator 10 includes a plurality of slots (refer to Fig. 2) at equal spacings in a circumferential direction (rotation direction), and includes an armature winding 112 wound in the slots at regular slot spacings.

The rotor 20 includes the rotor core 120 formed by laminating a large number of thin electromagnetic steel sheets in the direction of the rotation axis A1, and a permanent magnet 122 embedded and fixed in a magnet insertion hole 126 penetrating through the inside of the rotor core 120 in the direction of the rotation axis A1. The permanent magnet 122 has an oblong cross-sectional shape perpendicular to the rotation axis A1 as will be described later with reference to Fig. 2, and has a shape elongated in the direction of the rotation axis A1. In Fig. 1, the permanent magnet 122 appears to be continuous in the direction of the rotation axis A1, but may be formed in a divided manner such that several divided permanent magnets 122 are arranged in the direction of the rotation axis A1. Inside the rotor core 120, lightening holes 128 and 129 penetrating through the inside of the rotor core in an axial direction are formed on a side closer to the rotating shaft 4 than the permanent magnet 122.

When pressing plates (not illustrated) that obstruct movement of the permanent magnet in the direction of the rotation axis A1 are disposed, two respective end portions of the lightening holes 128 and 129 in the direction of the rotation axis A1 may close openings of the lightening holes 128 and 129, or can also be configured such that the openings are left open to allow air to flow therethrough. The lightening holes 128 and 129 are formed to reduce the amount of deformation of the magnet insertion hole 126 during high speed rotation through weight reduction, and further to prevent an increase in magnetic resistance on a q-axis. Incidentally, the lightening holes 128 and 129 can also be used for other purposes. For example, a structure in which a cooling medium (refrigerant), a coolant liquid, insulating oil, or the like flows from an opening at one end portion of the rotating rotor core 120 on the rotation axis A1 may be employed. When liquid is caused to flow through the lightening holes 128 and 129, a configuration in which the liquid is caused to flow under pressure using a pump can be employed. In addition, a configuration in which droplets are caused to fly toward the openings of the lightening holes 128 and 129, the rotational force of the rotor 20 is used to move the liquid inside the lightening holes 128 and 129, and the droplets are discharged from the other opening may be employed.

Fig. 2 is a cross-sectional view of A-A portion of Fig. 1, and shows a configuration inside the casing 2 in Fig. 1. In Fig. 2, the rotor 20 is fixed to the rotating shaft 4, and rotates about the rotation axis A1 together with the rotating shaft 4. Incidentally, in the following description, unless otherwise specified, the terms "inner peripheral side" and "outer peripheral side" refer to a side closer to and a side farther from the rotation axis A1, respectively. In addition, the term "radial direction" refers to a linear direction intersecting the rotation axis at right angle, and the term "circumferential direction" refers to the rotation direction of the rotor 20 as illustrated by an arrow in Fig. 2. The rotation direction of the rotor is, for example, the direction of the arrow in Fig. 2; however, the rotor can also be rotated in a direction opposite to the arrow.

The rotor 20 is composed of the rotating shaft 4; the rotor core 120 having an annular shape and made of a magnetic material; and the permanent magnet 122 embedded inside the magnet insertion hole 126. The rotor core 120 and the rotating shaft 4 are allowed to synchronously rotate by inserting and fixing the rotating shaft 4 into the rotor core 120. The rotor core 120 is made of a processed magnetic material. For example, the rotor core 120 is configured by laminating magnetic steel sheets formed into any shape by press working or laser processing. As the magnetic material, generally thin silicon steel sheets are used; however, the present invention is not limited thereto.

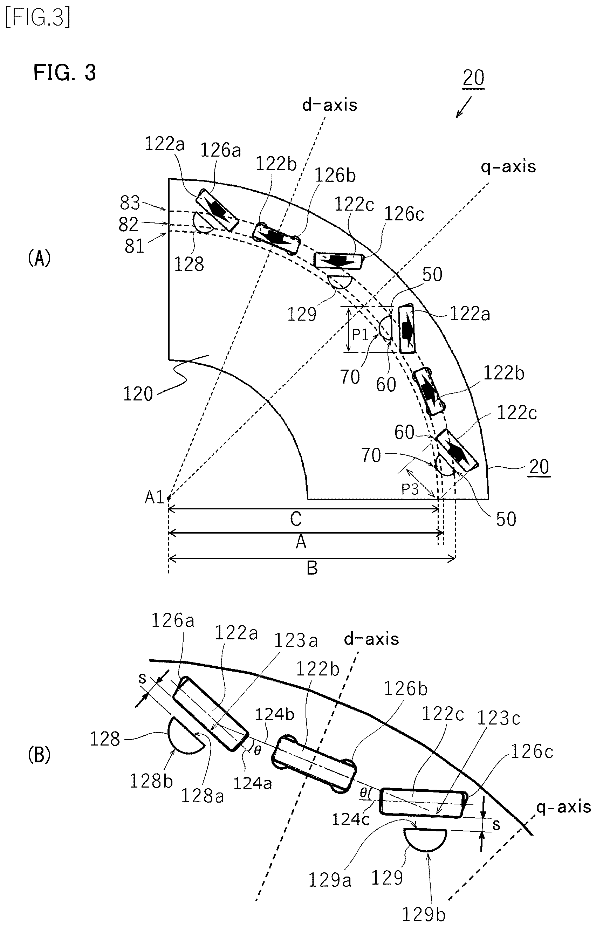

A plurality of the magnet insertion holes 126 and a plurality of the lightening holes 128 and 129 are formed inside the rotor core 120. In the rotating electrical machine 1 of the present embodiment, the number of magnetic poles is 8, and three permanent magnets 122 (122a, 122b, and 122c shown in Fig. 3) are disposed in each magnetic pole. For this reason, 24 (3 per pole x 8 poles) magnet insertion holes 126 are disposed in the circumferential direction. Since one permanent magnet 122 is disposed in each of the magnet insertion holes 126 that are formed independently, a total of 24 magnet insertion holes 126 are also disposed. Incidentally, in the present embodiment, the three permanent magnets 122 are disposed in one magnetic pole; however, the number of magnetic poles is any number of magnetic poles, and the present invention can be applied to a rotating electrical machine in which the number of magnets constituting one magnetic pole is 2 or more. When the number of the permanent magnets 122 disposed in the magnetic pole is an odd number, at least one is disposed on a d-axis, and the remaining permanent magnets 122 are disposed not to overlap the d-axis. When the number of the permanent magnets 122 disposed in the magnetic pole is an even number, all the permanent magnets 122 are disposed not to overlap the d-axis.

A plurality (here, three) of the permanent magnets 122 constituting one magnetic pole are disposed line-symmetrically about the d-axis that is the magnetic central axis of the magnetic pole. The permanent magnets 122 are arranged inside the rotor core 120 such that the orientation of the magnetic poles alternates for each pole in the circumferential direction. In the present embodiment, four pole pairs are formed. The material of the permanent magnets 122 may be any of ferrite magnets, neodymium magnets, samarium cobalt magnets, and the like. In addition, the permanent magnet 122 has the same or approximately the same length in the axial direction as the rotor core 120; however, this length may be divided into a plurality of segments, or may be divided not only in a length direction but also in the radial direction or the circumferential direction. When the number of magnets constituting one magnetic pole is an odd number, one of the magnets is disposed at the center to straddle the d-axis. The magnet insertion hole 126 has a rod shape with a substantially oblong cross-sectional shape, and a longitudinal direction of the rod shape extends in a direction parallel to the rotation axis A1. In accordance with the disposition of the permanent magnets 122, the magnet insertion hole 126 also has the same cross-sectional shape, and is formed to extend in the direction parallel to the rotation axis A1.

The stator 10 is composed of a stator yoke 110 having a substantially cylindrical shape; a plurality of teeth 116 protruding inward from an outer cylindrical portion of the stator yoke 110 in the radial direction; and the armature winding 112. 48 teeth 116 are arranged at equal spacings in the circumferential direction. A space surrounded by two teeth 116 on the outer peripheral side of the gap 102 is a slot 104, and the armature winding 112 is accommodated in the slot 104. The total number of the slots 104 is 48. The armature winding 112 can be made of a flat electric wire having a substantially oblong cross section; however, this shape is not essential, and the armature winding 112 may be made of a round wire having a circular cross section, or a stranded wire made by bundling thin wires. In addition, the armature winding 112 may be fixed in the slots 104 through an insulating material. As the material of the armature winding 112, for example, a copper wire in which an electric conductor containing copper as a main component is coated with an insulating coating (for example, enamel, engineering plastic, or the like) is used; however, bare wires without an insulating coating may be used as long as the bare wires can be insulated and protected with a mode in which copper wires are inserted one by one into bobbins made of an insulating material or the like. Tips of the teeth facing the gap are formed in a rectangular shape such that the cross section of each slot 104 has a substantially oblong shape. However, in the present invention, the shape of the slots 104 is not limited thereto. For example, flange portions having a substantially elliptical shape and extending to both sides of the circumferential direction may be formed at the tips of the teeth.

Fig. 3(A) is a partially enlarged view of only two poles extracted from the rotor 20 shown in Fig. 2, and Fig. 3(B) is a partially enlarged view in which an outer peripheral portion of one of the poles is further enlarged. One magnetic pole of the stator 10 is composed of a first magnet insertion hole 126a, a second magnet insertion hole 126b, and a third magnet insertion hole 126c provided in the rotor core 120; a first permanent magnet 122a, a second permanent magnet 122b, and a third permanent magnet 122c embedded in the respective magnet insertion holes; and two lightening holes 128 and 129. Other holes such as holes for positioning during assembly may be formed in the vicinity of the rotation axis of the rotor core 120, but are not illustrated here. In Fig. 3(A), each of the first to third permanent magnets 122a, 122b, and 122c is marked with an arrow indicating a magnetization direction of the permanent magnet. In Fig. 3 (A), outer peripheral surfaces of the permanent magnets 122a to 122c in the magnetic pole on a side where the d-axis is illustrated become S poles, and inner peripheral surfaces thereof become N poles. Meanwhile, outer peripheral surfaces of the permanent magnets 122a to 122c located in the pole on a side where the d-axis is not shown and illustrated with black arrows oriented outward in the radial direction become N poles, and inner peripheral surfaces thereof become S poles.

The second permanent magnet 122b is disposed such that, with the magnetic central axis of one magnetic pole serving as the d-axis, the center of the magnetization direction of the second permanent magnet 122b overlaps the d-axis. The magnet insertion holes 126a, 126b, and 126c into which the respective permanent magnets are inserted are formed in alignment with the disposition directions of the permanent magnets 122a to 122c to be disposed. In addition, each of the first permanent magnet 122a and the third permanent magnet 122c is disposed to be inclined at a predetermined angle θ with respect to a tangent direction of a rotation surface. Namely, the permanent magnet 122b disposed at a position overlapping the d-axis is disposed such that an angle between a radial centerline of the permanent magnet 122b and the d-axis is 90 degrees, and the permanent magnets 122a and 122c disposed at positions not overlapping the d-axis are inclined such that an angle between radial centerlines 124a and 124c of the permanent magnets 122a and 122c and the d-axis is less than 90 degrees, which is 90-θ degrees. The inclination directions of the permanent magnets 122a and 122c are reversed, and the permanent magnets 122a and 122c are disposed line-symmetrically with respect to the d-axis.

As shown in Fig. 3(B), the lightening hole 128 has a semicircular cross-sectional shape, and has a shape in which a straight portion 128a and an arc portion 128b are combined. The lightening hole 128 is disposed such that the straight portion 128a of the semicircle is located on the outer peripheral side and the arc portion 128b is located on the inner peripheral side, and the internal space of the semicircle becomes a hollow portion in which no magnetic pole is formed. Similarly, the lightening hole 129 has a semicircular cross-sectional shape, and has a shape in which a straight portion 129a and an arc portion 129b are combined. The cross-sectional shape is the same hollow shape at any cross section on the rotation axis A1, and the lightening holes 128 and 129 penetrate through the rotor core 120 to be continuous from one side to the other side in the direction of the rotation axis of the rotor core. Two lightening holes 128 and 129 are disposed per one magnetic pole, one lightening hole 128 is disposed on the inner peripheral side of the first magnet insertion hole 126a, and one lightening hole 129 is disposed on the inner periphery of the third magnet insertion hole 126c.

The lightening hole 128 is provided at a position facing a long side on the inner side of the first permanent magnet 122a having an oblong cross-sectional shape, and is provided to fall within a range obtained by projecting the range occupied by the first permanent magnet 122a inward from a long side portion in a perpendicular direction (projection range P1 shown in Fig. 3(A) that is surrounded by dash-dotted lines extending from short sides). The lightening hole 129 is provided to fall within a projection range on the inner side of the third permanent magnet 122c having an oblong cross-sectional shape (projection range P3 shown in Fig. 3(A) that is surrounded by dash-dotted lines extending from short sides). The straight portions 128a and 129a of outer edges constituting the lightening holes 128 and 129 are parallel to straight portions 123a and 123c on the inner peripheral side of the first magnet insertion hole 126a and the third magnet insertion hole 126c, the straight portions 128a and 129a facing straight portions 123a and 123c of the first magnet insertion hole 126a and the third magnet insertion hole 126c, and are separated by a certain distance S therefrom. Namely, a width between two parallel straight portions 123a and 128a and between two parallel straight portions 123c and 129a is S, and the straight portions 128a and 129a are formed in a positional relationship such that the width S is smaller than a length of the parallel portions. Each of the lightening holes 128 and 129 is disposed at a position not overlapping the d-axis that is the central axis of the magnetic pole, and is provided at a position away from the d-axis and the q-axis not to overlap the q-axis that is the boundary with the adjacent pole.

The insides of the lightening holes 128 and 129 are hollow, but may be used as passages for allowing a cooling medium (for example, air, coolant liquid, or oil) delivered from the outside by a pump or the like to flow through thereinside. An imaginary circle 83 shown by a dashed line that connects outermost peripheral points 50 of the lightening holes 128 and 129 is located closer to the outer peripheral side than an imaginary circle 82 shown by a dashed line that connects end portions (positions indicated by arrows 60) of the first magnet insertion hole 126a to the third magnet insertion hole 126c, the end portions being close to the central axis A1. Namely, a relationship between a distance B of the imaginary circle 83 from a center of the rotation axis, the imaginary circle 83 connecting the outermost peripheral points 50 of the lightening holes 128 and 129, and a distance A of the imaginary circle 82 from the center of the rotation axis, the imaginary circle 82 connecting innermost peripheral end portions 60 of the magnet insertion holes 126a to 126c, is set such that A < B is always satisfied.

An imaginary circle 81 shown by a dashed line that connects points 70 on the outer edges constituting the lightening holes 128 and 129, the points 70 being closest to the center of the rotation axis, is at a distance C from the central axis A1. The distance C is located on innermost peripheral portions constituting the lightening holes 128 and 129, and the distance relationship is always C < A < B. The innermost peripheral portion 70 is located on a semicircular curve constituting the lightening hole 128, and the curve is a portion having a largest curvature among the curves constituting the lightening holes 128 and 129. By implementing such a shape for the rotor core 120, the weight of the vicinity of the first magnet insertion hole 126a can be reduced by the lightening hole 128, and the weight of the vicinity of the third magnet insertion hole 126c can be reduced. Further, when the rotating electrical machine 1 is driven, the lightening holes 128 and 129 do not act as magnetic resistance that obstructs q-axis magnetic flux generated in the armature. Accordingly, the magnetic saliency of the rotating electrical machine increases, and available reluctance torque increases. In addition, when the rotor 20 rotates, a centrifugal force acts on the end portion 60 of each magnet insertion hole, and tensile stress occurs on both sides of the end portion 60 of the magnet insertion hole; however, by reducing the weight of the rotor core 120, the tensile stress is reduced, and stress concentration can be alleviated.

When the rotor 20 rotates, tensile stress acts on the parallel portions between the straight portions of the magnet insertion holes 126a and 126c and the straight portions 128a and 129a of the lightening holes 128 and 129 due to a centrifugal force; however, since no narrowed portion or uneven portion is formed in the parallel portions, a structure in which stress concentration is less likely to occur is realized. In addition, since the innermost peripheral points 70 on the inner peripheral side of the lightening holes 128 and 129 are located on the curved portions (curved surface portions), stress is dispersed, and a structure in which stress concentration is less likely to occur is realized, so that deformation or breakage of the lightening holes can be prevented. Incidentally, stress concentration applied to corners of the magnet insertion holes 126a to 126c that are located on the imaginary circle 82 is greatly alleviated since the majorities of the lightening holes 128 and 129 are located closer to the outer peripheral side than the corners of the magnet insertion holes 126a to 126c that are located on the imaginary circle 81. The reason is that the centrifugal force acts on the outer peripheral side of a stress concentration point. This effect is obtained by setting the relationship between the distances (the radius A and the radius B) of the imaginary circle 82 and the imaginary circle 83 from the rotation axis A1 such that A < B is always satisfied. However, if the distance between the lightening hole 128 and the magnet insertion hole 126a and between the lightening hole 129 and the magnet insertion hole 126c (distance S of the parallel portions) becomes too small, magnetic flux originating from the permanent magnets 122a to 122c is obstructed, and stress in the parallel portions increases, so that it is important to appropriately design the distance A in accordance with the rotation speed or magnet shape of the rotating electrical machine.

As described above, according to the present embodiment, not only the rotating electrical machine is prevented from being damaged due to a centrifugal force acting on the rotor when the rotating electrical machine 1 rotates at high speed, but also reluctance torque when field weakening is performed increases, so that more efficient rotating electrical machine can be configured.

### [Second embodiment]

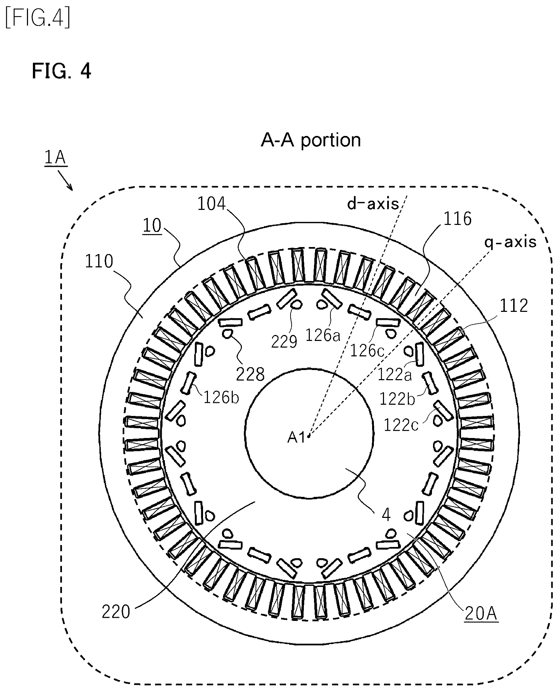

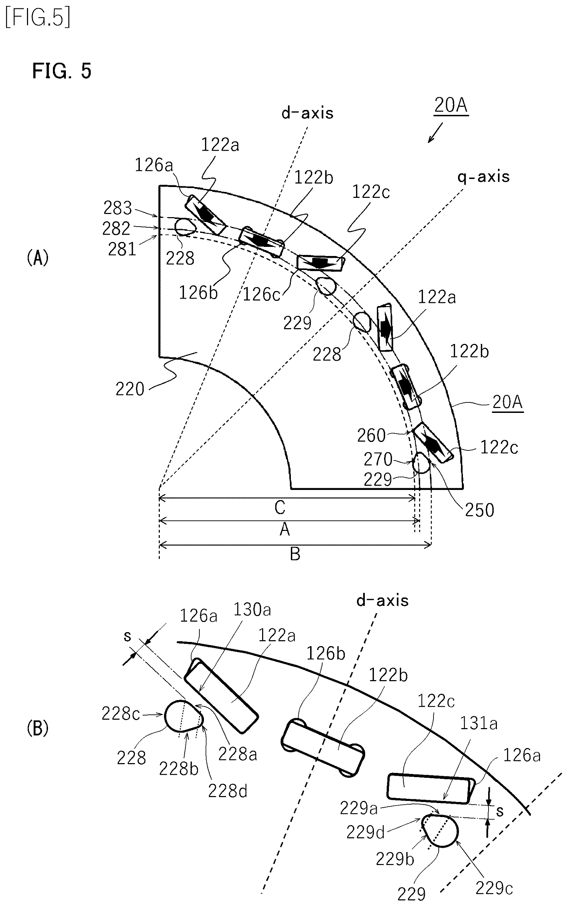

Next, a second embodiment of the present invention will be described with reference to Figs. 4 and 5. Fig. 4 is a cross-sectional view of a rotating electrical machine 1A according to the second embodiment of the present invention. A configuration of the stator 10 of the rotating electrical machine 1A shown in Fig. 4 is exactly the same as that of the stator 10 of the rotating electrical machine 1 of the first embodiment shown in Fig. 2. Only a part of the configuration of a rotor 20A is different from the rotor 20 shown in Fig. 2. The different configuration is portions corresponding to the lightening holes 128 and 129 in Fig. 2. In the second embodiment, the cross-sectional shape of lightening holes 228 and 229 in the direction of the rotation axis A1 is not a semicircular shape but a teardrop shape. The concept of providing two lightening holes 228 and 229 in one pole and providing the lightening holes 228 and 229 in the vicinities of the inner peripheral side of the permanent magnets 122a and 122c is the same as in the first embodiment. Incidentally, the shape or disposition of the magnet insertion holes 126a to 126c and the shape and inclination direction of the permanent magnets 122a to 122c inserted thereinto is the same as in the first embodiment shown in Fig. 2.

Fig. 5(A) is an enlarged view of two poles of the rotor 20A in the second embodiment of the present invention. Three permanent magnets 122a to 122c are provided in one magnetic pole in the circumferential direction. The permanent magnets 122a to 122c are accommodated in the first magnet insertion hole 126a, the second magnet insertion hole 126b, and the third magnet insertion hole 126c, respectively. Similarly to the first embodiment, the lightening hole 228 is disposed on the inner peripheral side of the magnet insertion hole 126a, and the lightening hole 229 is disposed on the inner peripheral side of the magnet insertion hole 126c. Similarly to the lightening holes 128 and 129, the lightening holes 228 and 229 are configured as through-holes in a rotor core 220. The rotor 20A includes the rotor core 220 with eight poles; however, the shape or disposition of the permanent magnets 122a to 122c in each pole is the same as in the first embodiment. Namely, when viewed in a cross section perpendicular to the rotation axis A1 as shown in Fig. 5(A), the shape of the rotor core 220 is a rotationally symmetric shape in the rotation direction about the rotation axis A1, and is line-symmetric with respect to any d-axis.

An imaginary circle 283 shown by a dashed line that connects outermost peripheral points 250 of the lightening holes 228 and 229 is located closer to the outer peripheral side than an imaginary circle 282 shown by a dashed line that connects end portions (positions indicated by arrows 260) of a first magnet insertion hole 226a to a third magnet insertion hole 226c, the end portions being close to the central axis A1. Namely, a relationship between the distance B of the imaginary circle 283 from the center of the rotation axis, the imaginary circle 283 connecting the outermost peripheral points 250 of the lightening holes 228 and 229, and the distance A of the imaginary circle 282 from the center of the rotation axis, the imaginary circle 282 connecting innermost peripheral positions 260 of the magnet insertion holes 226a to 226c, is set such that A < B is always satisfied.

An imaginary circle 281 shown by a dashed line that connects points 70 on outer edges constituting the lightening holes 228 and 229, the points 270 being closest to the center of the rotation axis, is at a distance C from the central axis A1. The distance C is located on innermost peripheral portions constituting the lightening holes 228 and 229, and the distance relationship is always C < A < B. The innermost peripheral portion 270 is located on a semicircular curve constituting the lightening hole 228, and the curve is a portion having a largest curvature among the curves constituting the lightening holes 228 and 229.

As shown in Fig. 5(B), the shape of the lightening hole 228 is a so-called teardrop shape composed of two straight portions 228a and 228b and two curved portions 228c and 228d connecting end portions of the straight portions 228a and 228b. Similarly to the first embodiment, one of the straight portions constituting the lightening hole 228 (straight portion 228a) is located on the outer peripheral side, and is parallel to the straight portion (portion indicated by arrow 130a) on the inner side of the magnet insertion hole 126a. A distance between the straight portions 228a and 130a is S. The other of the straight portions (straight portion 228b) is located on the inner peripheral side. The straight portions 228a and 228b are not parallel to each other, and the spacing between the straight portions 228a and 228b decreases as the straight portions 228a and 228b approach the curved portion 228d having a smaller radius of curvature. Conversely, the spacing between the straight portions 228a and 228b increases as the straight portions 228a and 228b approach the curved portion 228c having a larger radius of curvature. At both end positions (portions that cross dotted lines) of the straight portion 228a and 228b constituting the lightening hole 228, end portions facing each other to separate from each other are connected to the curved portion 228c, and end portions facing each other to approach each other are connected to the curved portion 228d. Incidentally, as is apparent from Fig. 5(A), the shape of the lightening hole 229 is the same as that of the lightening hole 228, and the lightening holes 228 and 229 in the same pole are in a line-symmetric relationship with respect to the d-axis (plane-symmetric when viewed three-dimensionally). One of the straight portions constituting the lightening hole 229 (straight portion 229a) is located on the outer peripheral side, and is parallel to and separated by the distance S from the straight portion on the inner side of the magnet insertion hole 126c (portion indicated by arrow 131a). The other of the straight portions (straight portion 229b) is located on the inner peripheral side.

Generally, in order to suppress the occurrence of iron loss due to a rotating magnetic field, the rotor core of the rotating electrical machine is formed by laminating thin electromagnetic steel sheet cores subjected to press working. At this time, if the shape of a hole subjected to press working has a sharp portion, excessive stress is applied during the working, and cracks or distortion occurs, which leads to a failure of the press working. For this reason, it is advantageous for the shape of the hole produced by press working to be a simple and curved shape. In the first embodiment, the sides forming the lightening holes 128 and 129 form a semicircular shape composed of one curved portion and one straight portion. For this reason, connecting portions between the curved portions and the straight portions of the lightening holes 128 and 129 have sharp portions, so that the shape is difficult to obtain through press working. Meanwhile, in the second embodiment, by configuring the lightening holes 228 and 229 to have a shape without sharp corners, not only can the same effects as in the first embodiment be obtained, but cracks or the like are also less likely to occur during press working, so that the shape provides high productivity, and the effect of improving the yield of rotor components is obtained.

### [Third embodiment]

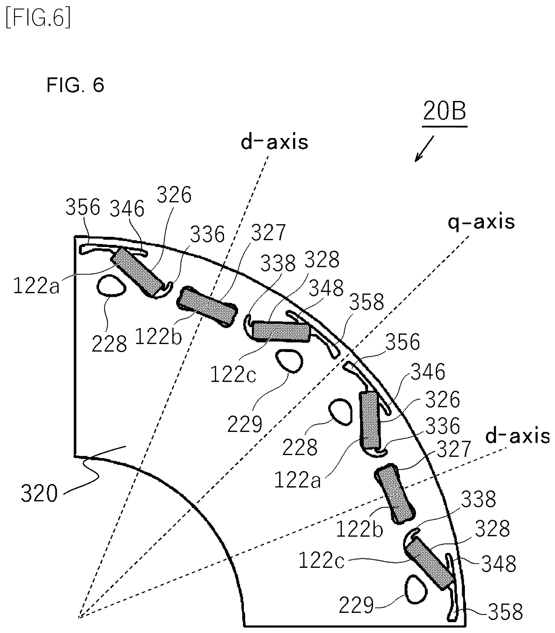

Fig. 6 is an enlarged view of two poles of a rotor 20B in a third embodiment of the present invention. A configuration thereof is, unless otherwise specified, the same as in the first embodiment and the second embodiment. The disposition of three permanent magnets 122a to 122c in each pole of a rotor core 320 is the same as in the first and second embodiments. In addition, the shape and disposition of two lightening holes 228 and 229 provided in each pole are the same as in the second embodiment. However, in the rotor core 320 of the third embodiment, the shapes of a magnet insertion hole 326 for holding the permanent magnet 122a and a magnet insertion hole 328 for holding the permanent magnet 122c are different from the shapes of the first magnet insertion hole 126a and the third magnet insertion hole 126c. The shape of a magnet insertion hole 327 that holds the second permanent magnet 122b is the same as that of the magnet insertion hole 126b shown in Fig. 3.

In the third embodiment, three voids extending away from the permanent magnets 122 and 126 in a projecting manner are formed in the vicinities of corners of the magnet insertion holes 326 and 328 that do not overlap the d-axis among three magnet insertion holes 326 to 328. Namely, in the magnet insertion hole 326, a projection-shaped void 336 is formed from the inner corner of an oblong space for accommodating the first permanent magnet 122a, the inner corner being closer to the d-axis. In addition, two void portions, namely, a projection-shaped void 346 extending in the circumferential direction toward the d-axis and a projection-shaped void 356 extending in the circumferential direction toward the q-axis are formed from the outer corner closer to the q-axis.

Similarly, in the magnet insertion hole 328, a projection-shaped void 338 is formed from the inner corner of an oblong space for accommodating the third permanent magnet 122c, the inner corner being closer to the d-axis. In addition, a projection-shaped void 348 extending in the circumferential direction toward the d-axis and a projection-shaped void 358 extending in the circumferential direction toward the q-axis are formed from the outer corner closer to the q-axis.

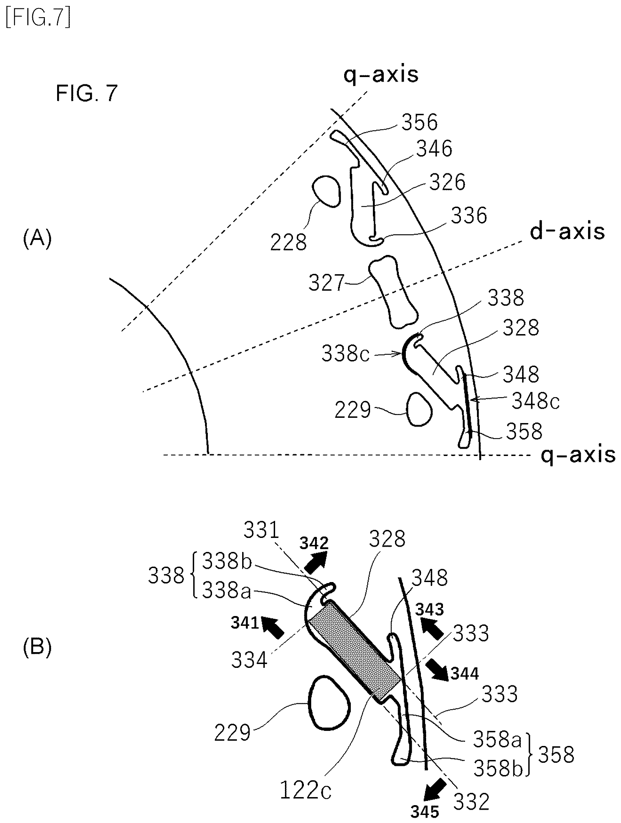

Fig. 7(A) is a partial enlarged view of a state where the permanent magnets 122a and 122b are removed from the figure of Fig. 6. In the third embodiment, in order to reduce stress on the radial inner side of the rotor core 320, the lightening holes 228 and 229 are disposed on the inner peripheral side of the first magnet insertion hole 326 and the third magnet insertion hole 328 that do not overlap the d-axis in the pole. As a result of providing the lightening holes 228 and 229, the effect of further dispersing stress concentrated on an inter-magnet bridge between the magnet insertion hole 326 and the magnet insertion hole 327 or between the magnet insertion hole 328 and the magnet insertion hole 327 in the rotor core 320 is obtained. In addition, the inner corners of the magnet insertion hole 326 and the magnet insertion hole 328 that are closer to the d-axis are not formed in a substantially right-angled shape along the permanent magnets 122a and 122c, but are formed with curved surfaces having a sufficiently large curvature as shown in a portion highlighted with a thick line as indicated by arrow 338c, so that stress concentration can be dispersed. The formation of the inner corner with a curved surface having a large curvature as indicated by arrow 338c can be realized by forming the projection-shaped void 338 serving as a gap between the permanent magnet 122c and the curved surface.

The projection-shaped voids 348 and 358, which are circumferentially elongated gaps that are continuous with each other, are formed at the corners of the magnet barrier that holds the radially outer corners of the permanent magnet near the q-axis of the magnet insertion hole 328. The corner is formed with a curved surface having a sufficiently large curvature (almost a straight shape in the shape of Fig. 7), as shown by a portion highlighted with a thick line as indicated by arrow 348c. In such a manner, since the projection-shaped voids 348 and 358 extending to be elongated in the circumferential direction are provided outside an outermost portion of the third permanent magnet 122c, the weight of the rotor core 320 can be reduced without obstructing the magnetic path of the q-axis. The weight reduction, combined with the weight reduction by the lightening hole 229, has the effect of reducing tensile stress acting on the magnet insertion holes 326 and 328. The shape of the first magnet insertion hole 326 is symmetric to the third magnet insertion hole 328 with respect to the d-axis (refer to Fig. 6), and the projection-shaped voids 336, 346, and 356 are formed in the first magnet insertion hole 326.

Fig. 7(B) is an enlarged view of the third magnet insertion hole 328. The third magnet insertion hole 326 has a shape in which the projection-shaped voids 338, 348, and 358 are connected to a space (shape corresponding to the magnet insertion hole 126c shown in Fig. 3) for accommodating the permanent magnet 122c to be inserted. The shape of the magnet insertion hole shown in Fig. 7(B) can be produced by punching out electromagnetic steel sheets constituting the rotor core 320 during press working. Here, it can be understood that the projection-shaped void 338 formed on a side closer to the d-axis is not formed in a right-angled shape that matches the shape of the inner peripheral corner of the permanent magnet 122c, but is formed with a curve (curved surface) having a large radius of curvature as indicated by arrow 338c in Fig. 7(A). In addition, by extending a curved surface portion in the vicinity of the corner of the projection-shaped void 338 outward in the radial direction, the projection-shaped void 338 is formed as a cutout that extends away from the short side of the permanent magnet 122c which is closer to the d-axis, and that extends outward in the radial direction. Namely, a radially extending portion of the projection-shaped void 338 is formed in a portion 338a that falls within the projection range of the short side of the permanent magnet 122c, and is formed such that the tip thereof extends to a position outside an imaginary line (imaginary surface) 331 extending from an outer surface of the permanent magnet 122c as indicated by arrow 342, stress occurring in the vicinity of arrow 338a can be sufficiently reduced.

The projection-shaped void 358 formed on a side closer to the q-axis forms approximately half of a portion required to form the periphery of the outer peripheral corner of the permanent magnet 122c, not in a right-angled shape, but with a large curve (curved surface) that is approximately straight. The projection-shaped void 358 extends in the direction of arrow 334 from a position on the short side of the permanent magnet 122c that is closer to the q-axis (position shown by a dash-dotted line 333). The extending range is formed to a size that extends beyond the projection range of the short side closer to the q-axis (range surrounded by dash-dotted lines 332 and 333) to the direction of arrow 345. Namely, the projection-shaped void 358 is formed not only in a portion 358a that falls within the projection range of the short side of the permanent magnet 122c, but also in a portion 358b formed by extending the tip of the portion 358a to a position inside the imaginary line (imaginary surface) 332 extending from an inner surface of the permanent magnet 122c.

The projection-shaped void 348 extending from the vicinity of the outer corner on the side closer to the q-axis is formed by extending the radial outer side of the third permanent magnet 122c in a d-axis direction. The extending range is formed to extend toward the side closer to the d-axis than a projection line (dash-dotted line 333) of the short side of the permanent magnet 122c that is closer to the q-axis, namely, in the direction of arrow 343. The projection-shaped void 348 is disposed to be connected to the projection-shaped void 358 in the circumferential direction. In such a manner, by forming the projection-shaped void 348 and the projection-shaped void 358 in a connected manner that are sufficiently large compared to the size of the third permanent magnet 122c, the weight of the rotor core 320 can be sufficiently reduced. In the third embodiment, in addition to the weight reduction by the lightening holes 228 and 229, locally occurring stress can be reduced, so that the effect of preventing deformation or breakage of the magnet insertion holes 336 to 338 is further improved.

The present invention has been described above based on the three embodiments; however, the present invention is not limited to the above-described embodiments, and can be modified in various forms without departing from the concept of the present invention. For example, the number of poles of the rotor core is not limited to 8, and may be any other number (as long as the number of poles is an even number). In addition, the number of permanent magnets disposed in one pole is not limited to 3, and may be 4 or more. When four or more permanent magnets are disposed in one pole, it is preferable that lightening holes are formed on the inner peripheral sides of each of the permanent magnets adjacent to the q-axis.

### REFERENCE SIGNS LIST

1, 1A, 1B Rotating electrical machine
2 Casing
4 Rotating shaft
10 Stator
20, 20A, 20B Rotor
50 Outermost peripheral portion of lightening hole
60 Innermost peripheral end portion of magnet insertion hole
70 Innermost peripheral portion of lightening hole
81, 82, 83 Imaginary line
102 Gap
104 Slot
110 Stator yoke
112 Armature winding
116 Teeth
120, 220, 320 Rotor core
122a, 122b, 122c Permanent magnet
123a, 123c Straight portion on inner peripheral side of permanent magnet
126a, 126b, 126c Magnet insertion hole
128, 129 Lightening hole
128a, 129a Straight portion (of lightening hole)
128b, 129b Arc portion (of lightening hole)
228, 229 Lightening hole
228a, 228b, 229a, 229bStraight portion (of lightening hole)
228c, 228d, 229c, 229dArc portion (of lightening hole)
250 Outermost peripheral portion of lightening hole
260 Innermost peripheral end portion of magnet insertion hole
270 Innermost peripheral portion of lightening hole
326, 327, 328 Magnet insertion hole
336, 338, 346, 348, 356, 358 Projection-shaped void
A, B, C Distance from rotation axis
A1 Rotation axis

## Claims

1. A rotating electrical machine comprising:
a rotor having a magnet insertion hole into which a permanent magnet constituting a magnetic pole is inserted, and held to be rotatable about a rotation axis; and
a stator disposed outside the rotor, and including a stator coil,
wherein a plurality of the magnet insertion holes are disposed line-symmetrically about a d-axis that is a magnetic pole central axis,
a lightening hole is formed on a rotation axis side of the magnet insertion hole located away from the d-axis among the plurality of magnet insertion holes,
the lightening hole is a hole that is continuous in a direction of the rotation axis, a cross-sectional shape of the lightening hole perpendicular to the rotation axis is formed to include a straight portion and a curved portion, an innermost peripheral position of the lightening hole that is closest to a center of the rotation axis is located on the curved portion, and the curved portion is formed with a largest curvature, and
facing portions between the magnet insertion hole and a side on an inner peripheral side of the lightening hole are located at a certain distance, and an outermost peripheral position of the lightening hole is located closer to an outer peripheral side than an end portion closest to a central axis of the rotor among sides constituting the magnet insertion hole.

2. The rotating electrical machine according to claim 1,
wherein the cross-sectional shape of the lightening hole is formed by the straight portion and the curved portion connecting both end portions of the straight portion.

3. The rotating electrical machine according to claim 1,
wherein the cross-sectional shape of the lightening hole is formed by two straight portions facing each other, a curved portion having a smaller radius of curvature and connecting one end portions of the two straight portions, and a curved portion having a larger radius of curvature and connecting the other end portions of the two straight portions.

4. The rotating electrical machine according to any one of claims 1 to 3,
wherein a cross-sectional shape of a plurality of the permanent magnets disposed line-symmetrically about the d-axis in one pole is long in a rotation direction and is short in a radial direction,
the permanent magnet disposed at a position overlapping the d-axis is disposed such that an angle between a radial centerline of the permanent magnet and the d-axis is 90 degrees, and
the permanent magnet disposed at a position not overlapping the d-axis is disposed such that a radial centerline of the permanent magnet is inclined at an angle of less than 90 degrees with respect to the d-axis and a side of the permanent magnet away from the d-axis is located outward in the radial direction.

5. The rotating electrical machine according to claim 4,
wherein protruding portions for forming curved surface portions having a large radius of curvature are formed at portions facing an inner peripheral corner of the magnet insertion hole that is closer to the d-axis, and an outer peripheral corner of the magnet insertion hole that is farther from the d-axis.

6. The rotating electrical machine according to claim 4,
wherein the lightening hole is formed such that in the cross-sectional shape of the lightening hole, two straight portions are parallel to each other and a width of a parallel portion is shorter than a length of the parallel portion.

7. The rotating electrical machine according to claim 6,
wherein the number of the permanent magnets constituting one magnetic pole is an odd number, one of the plurality of permanent magnets is disposed to overlap the d-axis, and the remaining permanent magnets are disposed not to overlap the d-axis.

8. The rotating electrical machine according to claim 1,
wherein the lightening hole is used as a passage for allowing a cooling medium to flow.

9. A rotating electrical machine comprising:
a stator including a stator coil;
a rotor in which the number of magnetic poles is n and in which a plurality of permanent magnets are inserted in each magnetic pole; and
a rotating shaft to which the rotor is fixed,
wherein the rotor includes a rotor core formed from electromagnetic steel sheets laminated in a direction of a rotation axis,
in each magnetic pole of the rotor core, a second permanent magnet is disposed on a d-axis that is a magnetic pole central axis, and a first permanent magnet and a third permanent magnet are disposed line-symmetrically with respect to the d-axis,
the first permanent magnet to the third permanent magnet are formed such that a circumferential width is larger than a radial thickness, and are disposed to locate sides of the first permanent magnet to the third permanent magnet outward in a radial direction, sides being closer to p-axes, such that directions of circumferential centerlines of the first permanent magnet to the third permanent magnet have a predetermined angle θ with respect to a tangent direction of the rotor core,
a first lightening hole and a second lightening hole having a semicircular or waterdrop-shaped cross-sectional shape are formed on an inner peripheral side of the first permanent magnet and the third permanent magnet of the rotor core in the radial direction,
the first lightening hole is disposed inside the first permanent magnet, and the second lightening hole is disposed inside the third permanent magnet, and
straight portions are formed in parts of the cross-sectional shapes of the first lightening hole and the second lightening hole, and the lightening holes are disposed such that the straight portions are parallel to facing long sides of the permanent magnets having an oblong cross section.

10. The rotating electrical machine according to claim 9,
wherein the first lightening hole is disposed to partially overlap a region defined by the first permanent magnet and a center of the rotation axis, and
the second lightening hole is disposed to partially overlap a region defined by the third permanent magnet and the center of the rotation axis.

11. The rotating electrical machine according to claim 10,
wherein an outermost peripheral position of the first lightening hole is located closer to an outer peripheral side of the rotor than an end portion closest to a central axis of the rotor among sides constituting an insertion hole for the first permanent magnet, and
an outermost peripheral position of the second lightening hole is located closer to the outer peripheral side of the rotor than an end portion closest to the central axis of the rotor among sides constituting an insertion hole for the third permanent magnet.

12. The rotating electrical machine according to claim 11,
wherein each of the first lightening hole and the second lightening hole is formed by two straight portions that are not parallel, and two curved portions having different radii of curvature and connecting both end portions of the two straight portions, and
the first lightening hole and the second lightening hole in the same pole are disposed symmetrically with respect to the d-axis.

13. The rotating electrical machine according to claim 11,
wherein the first lightening hole and the second lightening hole are formed in a semicircular shape, and are disposed in the same pole to be symmetric with respect to the d-axis.

## Amended claims

### Amended claims under Art. 19.1 PCT

1. A rotating electrical machine comprising:
a rotor having a magnet insertion hole into which a permanent magnet constituting a magnetic pole is inserted, and held to be rotatable about a rotation axis; and
a stator disposed outside the rotor, and including a stator coil,
wherein a plurality of the magnet insertion holes located both side away from the q-axis are disposed line-symmetrically about a d-axis that is a magnetic pole central axis,
a lightening hole is formed on a rotation axis side of the magnet insertion hole located away from the d-axis among the plurality of magnet insertion holes,
the lightening hole is a hole that is continuous in a direction of the rotation axis, a cross-sectional shape of the lightening hole perpendicular to the rotation axis is formed to include a straight portion and a curved portion, an innermost peripheral position of the lightening hole that is closest to a center of the rotation axis is located on the curved portion, and the curved portion is formed with a largest curvature, and
facing portions between the magnet insertion hole and a side on an inner peripheral side of the lightening hole are located at a certain distance, and an outermost peripheral position of the lightening holes, which are located in both sides away from the d-axis, is located closer to an outer peripheral side than an end portion closest to a central axis of the rotor among sides constituting the magnet insertion hole.

2. The rotating electrical machine according to claim 1,
wherein the cross-sectional shape of the lightening hole is formed by the straight portion and the curved portion connecting both end portions of the straight portion.

3. The rotating electrical machine according to claim 1,
wherein the cross-sectional shape of the lightening hole is formed by two straight portions facing each other, a curved portion having a smaller radius of curvature and connecting one end portions of the two straight portions, and a curved portion having a larger radius of curvature and connecting the other end portions of the two straight portions.

4. The rotating electrical machine according to any one of claims 1 to 3,
wherein a cross-sectional shape of a plurality of the permanent magnets disposed line-symmetrically about the d-axis in one pole is long in a rotation direction and is short in a radial direction,
the permanent magnet disposed at a position overlapping the d-axis is disposed such that an angle between a radial centerline of the permanent magnet and the d-axis is 90 degrees, and
the permanent magnet disposed at a position not overlapping the d-axis is disposed such that a radial centerline of the permanent magnet is inclined at an angle of less than 90 degrees with respect to the d-axis and a side of the permanent magnet away from the d-axis is located outward in the radial direction.

5. The rotating electrical machine according to claim 4,
wherein protruding portions for forming curved surface portions having a large radius of curvature are formed at portions facing an inner peripheral corner of the magnet insertion hole that is closer to the d-axis, and an outer peripheral corner of the magnet insertion hole that is farther from the d-axis.

6. The rotating electrical machine according to claim 4,
wherein the lightening hole is formed such that in the cross-sectional shape of the lightening hole, two straight portions are parallel to each other and a width of a parallel portion is shorter than a length of the parallel portion.

7. The rotating electrical machine according to claim 6,
wherein the number of the permanent magnets constituting one magnetic pole is an odd number, one of the plurality of permanent magnets is disposed to overlap the d-axis, and the remaining permanent magnets are disposed not to overlap the d-axis.

8. The rotating electrical machine according to claim 1,
wherein the lightening hole is used as a passage for allowing a cooling medium to flow.

9. A rotating electrical machine comprising:
a stator including a stator coil;
a rotor in which the number of magnetic poles is n and in which a plurality of permanent magnets are inserted in each magnetic pole; and
a rotating shaft to which the rotor is fixed,
wherein the rotor includes a rotor core formed from electromagnetic steel sheets laminated in a direction of a rotation axis,
in each magnetic pole of the rotor core, a second permanent magnet is disposed on a d-axis that is a magnetic pole central axis, and a first permanent magnet and a third permanent magnet are disposed line-symmetrically with respect to the d-axis,
the first permanent magnet to the third permanent magnet are formed such that a circumferential width is larger than a radial thickness, and are disposed to locate sides of the first permanent magnet to the third permanent magnet outward in a radial direction, sides being closer to p-axes, such that directions of circumferential centerlines of the first permanent magnet to the third permanent magnet have a predetermined angle θ with respect to a tangent direction of the rotor core,
a first lightening hole and a second lightening hole having a semicircular or waterdrop-shaped cross-sectional shape are formed on an inner peripheral side of the first permanent magnet and the third permanent magnet of the rotor core in the radial direction,
the first lightening hole is disposed inside the first permanent magnet, and the second lightening hole is disposed inside the third permanent magnet, and
straight portions are formed in parts of the cross-sectional shapes of the first lightening hole and the second lightening hole, and the lightening holes are disposed such that the straight portions are parallel to facing long sides of the permanent magnets having an oblong cross section.

10. The rotating electrical machine according to claim 9,
wherein the first lightening hole is disposed to partially overlap a region defined by the first permanent magnet and a center of the rotation axis, and
the second lightening hole is disposed to partially overlap a region defined by the third permanent magnet and the center of the rotation axis.

11. The rotating electrical machine according to claim 10,
wherein an outermost peripheral position of the first lightening hole is located closer to an outer peripheral side of the rotor than an end portion closest to a central axis of the rotor among sides constituting an insertion hole for the first permanent magnet, and
an outermost peripheral position of the second lightening hole is located closer to the outer peripheral side of the rotor than an end portion closest to the central axis of the rotor among sides constituting an insertion hole for the third permanent magnet.

12. The rotating electrical machine according to claim 11,
wherein each of the first lightening hole and the second lightening hole is formed by two straight portions that are not parallel, and two curved portions having different radii of curvature and connecting both end portions of the two straight portions, and
the first lightening hole and the second lightening hole in the same pole are disposed symmetrically with respect to the d-axis.

13. The rotating electrical machine according to claim 11,
wherein the first lightening hole and the second lightening hole are formed in a semicircular shape, and are disposed in the same pole to be symmetric with respect to the d-axis.

Statement under Art. 19.1 PCT
Explanation based on Article 19 (1) of the Convention. In claim 1, the following underlined portion was inserted:
 " facing portions between the magnet insertion hole and a side on an inner peripheral side of the lightening hole are located at a certain distance, and an outermost peripheral position of the lightening holes, which are located in both sides away from the d-axis, is located closer to an outer peripheral side than an end portion closest to a central axis of the rotor among sides constituting the magnet insertion hole."
